# EUROPÄISCHE PATENTANMELDUNG

(11) **EP 4 474 207 A1**
(43) Veröffentlichungstag der Anmeldung: **11.12.2024**
(21) Anmeldenummer: 24176003.2
(22) Anmeldetag: 15.05.2024
(51) Int. Cl.: B60L 53/65, B60L 53/66

(54) **VERFAHREN ZUR ZUORDNUNG EINES FAHRZEUGES ZU EINER LADESÄULE**

(30) Priorität: 05.06.2023 DE 102023002260
(71) Anmelder: Mercedes-Benz Group AG, 70372 Stuttgart (DE)
(72) Erfinder: Langhammer, Sebastian, 71032 Böblingen (DE); Novy, Alexander, 71083 Herrenberg (DE); Schwenk, Karl, 75233 Tiefenbronn (DE); Faix, Manuel, 71069 Sindelfingen (DE); Briegel, Benjamin, 72074 Tübingen (DE); Khajjou, Mustapha, 75365 Calw-Stammheim (DE)
(74) Vertreter: Buchta, Hao

(57) **Zusammenfassung**

Die Erfindung betrifft ein Verfahren zur Zuordnung eines Fahrzeuges zu einer Ladesäule zum Laden eines elektrischen Energiespeichers des Fahrzeuges, wobei die Ladesäule mit einer Rechnereinheit datentechnisch gekoppelt ist und das Fahrzeug datentechnisch mit einer weiteren Rechnereinheit gekoppelt ist. Erfindungsgemäß ist vorgesehen, dass
- bei einer hergestellten elektrischen Verbindung zwischen der Ladesäule und dem elektrischen Energiespeicher ein mittels der weiteren Rechnereinheit oder der Rechnereinheit individuell erzeugtes Muster (M) in einem Ladeleistungsverlauf vorgegeben wird und
- das Fahrzeug der Ladesäule zugeordnet wird, bei welcher mittels der Rechnereinheit oder der weiteren Rechnereinheit das vorgegebenen Muster (M) des Ladeleistungsverlaufes wiedererkannt wird.

## Beschreibung

Die Erfindung betrifft ein Verfahren zur Zuordnung eines Fahrzeuges zu einer Ladesäule zum Laden eines elektrischen Energiespeichers des Fahrzeuges, wobei die Ladesäule mit einer Rechnereinheit datentechnisch gekoppelt ist und das Fahrzeug datentechnisch mit einer weiteren Rechnereinheit gekoppelt ist.

Aus der DE 10 2016 202 002 A1 ist eine Energiemanagementeinrichtung zur Steuerung eines Ladesteuergerätes in einem Elektrofahrzeug bekannt. Dabei ist die Energiemanagementeinrichtung eingerichtet, ein Ladeprofil im Ladesteuergerät für die Aufladung einer Batterie des Elektrofahrzeuges an einer Ladestation oder im Elektrofahrzeug selbst einzustellen, wobei das Ladeprofil unter Berücksichtigung eines geplanten Nutzungszeitpunktes des Elektrofahrzeuges und eines gewünschten Ladezustandes der Batterie sowie eines vorgegebenen Wertes für die maximale aufnehmbare Ladeleistung des Elektrofahrzeuges eingestellt wird. Die Energiemanagementeinrichtung ist mit einer Messeinheit gekoppelt, die eingerichtet ist, eine an das Elektrofahrzeug seitens der Ladestation abgegebene tatsächliche Ladeleistung zu messen und, selbstständig oder in Folge einer Anfrage seitens der Energiemanagementeinrichtung, an die Energiemanagementeinrichtung zu übertragen, und wobei die Energiemanagementeinrichtung eingerichtet ist, den Wert der tatsächlichen Ladeleistung für eine entsprechende Neueinstellung des Ladeprofils zu verwenden.

Der Erfindung liegt die Aufgabe zugrunde, ein Verfahren zur Zuordnung eines Fahrzeuges zu einer Ladesäule zum Laden eines elektrischen Energiespeichers des Fahrzeuges anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zur Zuordnung eines Fahrzeuges zu einer Ladesäule zum Laden eines elektrischen Energiespeichers des Fahrzeuges, wobei die Ladesäule mit einer Rechnereinheit datentechnisch gekoppelt ist und das Fahrzeug datentechnisch mit einer weiteren Rechnereinheit gekoppelt ist, sieht erfindungsgemäß vor, dass
- bei einer hergestellten elektrischen Verbindung zwischen der Ladesäule und dem elektrischen Energiespeicher ein mittels der weiteren Rechnereinheit oder der Rechnereinheit individuell erzeugtes Muster in einem Ladeleistungsverlauf vorgegeben wird und
- das Fahrzeug der Ladesäule zugeordnet wird, bei welcher mittels der Rechnereinheit oder der weiteren Rechnereinheit das vorgegebenen Muster des Ladeleistungsverlaufes wiedererkannt wird.

Durch Anwendung des Verfahrens ist eine eindeutige Zuordnung des Fahrzeuges zu einer Ladesäule möglich, so dass das Fahrzeug in Bezug auf die Ladesäule eindeutig identifiziert werden kann. Aufgrund der eindeutigen Zuordnung können Informationen über einen Ladestand des elektrischen Energiespeichers des Fahrzeuges und gegebenenfalls über eine durch einen Fahrzeugnutzer vorgegebene Abfahrtszeit des Fahrzeuges von der Ladesäule zwischen dieser und dem Fahrzeug, insbesondere mittels der weiteren Rechnereinheit und der Rechnereinheit, ausgetauscht werden.

Insbesondere ist es mittels des Verfahrens möglich, bei mehreren gleichzeitig gestarteten Ladevorgängen aufgrund des jeweiligen Musters, welches als Erkennungsmuster dient, einen jeweiligen Ladevorgang einem Fahrzeug und einer Ladesäule korrekt zuzuordnen.

In einer Ausführung des Verfahrens wird das Muster in dem Ladeleistungsverlauf über einen Zielladezustand des elektrischen Energiespeichers mittels der weiteren Rechnereinheit vorgegeben. Das heißt, dass das Muster mittels der datentechnisch mit dem Fahrzeug gekoppelten weiteren Rechnereinheit zufällig erzeugt und vorgegeben wird, um zu ermitteln, an welcher Ladesäule einer Ladestation sich das Fahrzeug zum Laden seines elektrischen Energiespeichers befindet.

In einer weiteren Ausführung wird das Muster in dem Ladeleistungsverlauf über den Zielladezustand derart mittels der weiteren Rechnereinheit vorgegeben, dass eine Ladeunterbrechung generiert wird, indem der Zielladezustand unter einen momentanen Ladezustand gesetzt wird und das Laden fortgesetzt wird, indem der Zielladezustand über den momentanen Ladezustand gesetzt wird. Wird dieses Muster dann von der Rechnereinheit der Ladesäule erkannt, so kann das Fahrzeug dieser Ladesäule eindeutig zugeordnet werden, so dass gegebenenfalls Informationen zwischen der Ladesäule und dem Fahrzeug ausgetauscht werden können.

In einer weiteren Ausführung des Verfahrens wird als Muster eine zufällige Anzahl von Ladeleistungsniveaus mit zufälligen Haltezeiten mittels der datentechnisch mit der Ladesäule gekoppelten Rechnereinheit vorgegeben. Dabei können die Ladeleistungsniveaus und/oder die Haltezeiten zum Erzeugen eines weiteren solchen Musters variieren, um ein Fahrzeug einer Ladesäule eindeutig zuordnen zu können.

Eine Weiterbildung sieht vor, dass bei der Erkennung des Musters sowohl eine Abweichung in Bezug auf die Ladeleistungsniveaus als auch eine Abweichung in Bezug auf die Haltezeiten berücksichtigt wird. Eine solche Abweichung kann insbesondere bei einer Übertragung zwischen der Rechnereinheit und der Ladesäule sowie der weiteren Rechnereinheit und dem Fahrzeug resultieren.

In einer weiteren Ausführung erfolgt eine mögliche Vorauswahl der Zuordnung von Fahrzeugen zu Ladesäulen anhand eines Zeitstempels der Verbindungsherstellung zwischen dem jeweiligen Fahrzeug und der jeweiligen Ladesäule. Mittels des individuellen, zufällig erzeugten Musters kann diese Vorauswahl der Zuordnung dann bestätigt oder verworfen werden.

In einer alternativen oder zusätzlichen Ausführung erfolgt eine mögliche Vorauswahl der Zuordnung von Fahrzeugen zu Ladesäulen anhand ermittelter Positionsbestimmungsdaten des jeweiligen Fahrzeuges und der jeweiligen Ladesäule. Mittels des individuellen, zufällig erzeugten Musters kann diese Vorauswahl der Zuordnung dann bestätigt oder verworfen werden.

In einer weiteren Ausführung wird eine Liste erstellt, welche jeweils zugehörige Ladevorgänge in der weiteren Rechnereinheit und der Rechnereinheit beinhaltet, so dass nachvollziehbar ist, welches Fahrzeug und/oder welche Ladesäule, die eindeutig einander zugeordnet sind, eine jeweilige Information, beispielsweise in Bezug auf eine Ladeleistung und/oder in Bezug auf eine Abfahrtszeit des Fahrzeuges von der Ladesäule, betrifft. Somit ist es beispielsweise möglich, einen Belegungsplan der Ladesäule zu erstellen.

Wird in einer möglichen Ausführungsform anhand des Musters erkannt, welches Fahrzeug sich an welcher Ladesäule befindet, so dass eine eindeutige Zuordnung möglich ist, wird das Laden des elektrischen Energiespeichers des Fahrzeuges an der Ladesäule ausgeführt.

Ausführungsbeispiele der Erfindung werden im Folgenden anhand von Zeichnungen näher erläutert.

Dabei zeigen:
- Fig. 1: schematisch zwei Abbildungen mit jeweils einem Diagramm, wobei ein Muster zur Zuordnung eines Fahrzeuges zu einer Ladesäule mittels einer Rechnereinheit der Ladesäule erzeugt wird und
- Fig. 2: schematisch zwei Abbildungen mit jeweils einem Diagramm, wobei ein Muster zur Zuordnung des Fahrzeuges zu der Ladesäule mittels einer datentechnisch mit dem Fahrzeug gekoppelten weiteren Rechnereinheit erzeugt wird.

Einander entsprechende Teile sind in allen Figuren mit den gleichen Bezugszeichen versehen.

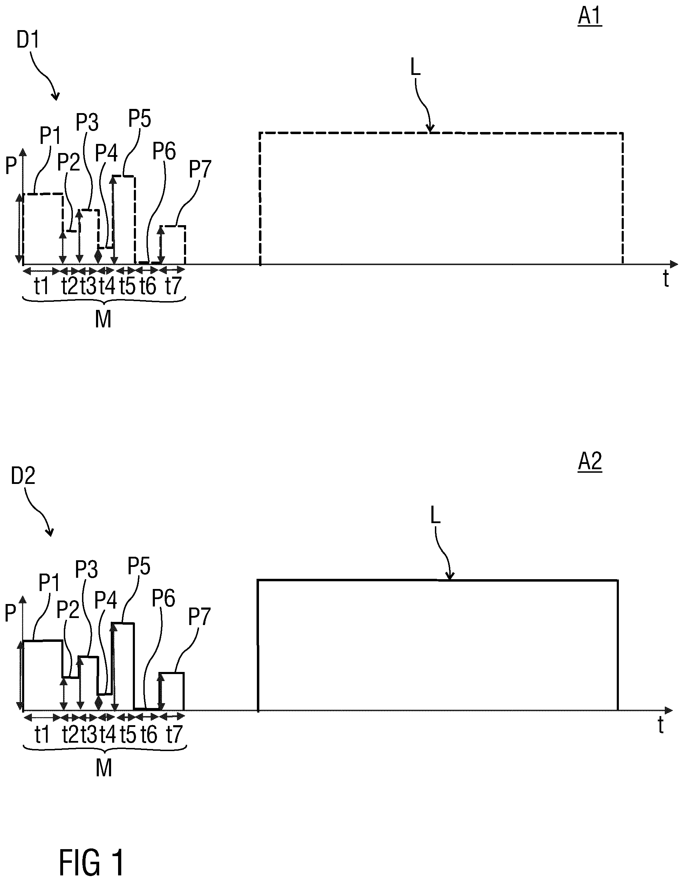

Figur 1 zeigt zwei Abbildungen A1, A2 mit jeweils einem Diagramm D1, D2, wobei auf einer Ordinate eine Ladeleistung P und auf der Abszisse die Zeit t abgetragen ist.

Eine Abbildung A1 zeigt ein Diagramm D1 mit einem Muster M in einem Ladeleistungsverlauf, insbesondere eine Ladeleistungsvorgabe, welche mittels einer nicht näher gezeigten, datentechnisch mit einer Ladesäule gekoppelten Rechnereinheit, einem sogenannten Infrastrukturbackend, erzeugt wird.

In einer in Figur 1 gezeigten weiteren Abbildung A2 ist ein weiteres Diagramm D2 mit einer mittels einer datentechnisch mit einem Fahrzeug gekoppelten weiteren Rechnereinheit, einem sogenannten Fahrzeugbackende, ermittelten Ladeleistung P dargestellt.

Bei dem Fahrzeug handelt es sich um ein Elektrofahrzeug oder ein Hybridfahrzeug, wobei das Fahrzeug eine elektrische Antriebseinheit und einen mit dieser gekoppelten elektrischen Energiespeicher aufweist. Ein solcher elektrischer Energiespeicher wird, insbesondere in Abhängigkeit seines Ladestandes, an einer Ladesäule, beispielsweise einer Ladestation mit mehreren solcher Ladesäulen aufgeladen.

Eine Kommunikation zwischen einer solchen Ladesäule und einem elektrisch mit dieser verbundenen elektrischen Energiespeicher des Fahrzeuges ermöglicht der Ladesäule nicht, das angeschlossene Fahrzeug eindeutig zu identifizieren. Zudem ist es nicht möglich, Informationen über eine fahrzeugseitig benötigte elektrische Energie, welche auch als Ladeenergie bezeichnet wird, und/oder eine vorgesehene Abfahrtszeit des Fahrzeuges mit der Ladesäule auszutauschen. Die Ladesäule erkennt lediglich einen erlaubten maximalen Ladestrom und kann diesen an das mit der Ladesäule verbundene Fahrzeug senden, um so eine Ladeleistungssteuerung zu ermöglichen. Der datentechnisch mit dem Fahrzeug gekoppelten weiteren Rechnereinheit liegen der Ladestand des elektrischen Energiespeichers des Fahrzeuges, eine momentane Ladeleistung P, eine eventuell eingestellte Abfahrtszeit und gegebenenfalls weitere Informationen und/oder Daten vor.

Eine eindeutige Identifikation eines mit einer Ladesäule verbundenen Fahrzeuges ermöglicht, dass Informationen und/oder Daten sowie Steuerungskanäle jeweils aus der Rechnereinheit der Ladesäule und der weiteren Rechnereinheit des Fahrzeuges fusioniert werden können, wodurch eine deutlich breitere Datenbasis für digitale Dienste zur Verfügung gestellt werden kann. Beispielsweise kann ein Bezahlvorgang basierend auf der eindeutigen Zuordnung eingeleitet werden.

Wird der elektrische Energiespeicher, insbesondere mittels eines Ladekabels, mit der Ladesäule verbunden, das heißt, dass ein Einstecken des Ladekabels erkannt wird, wird an dieser Ladesäule ein individuelles Muster M als Erkennungsmuster über eine Ladeleistung P vorgegeben. Dieses Muster M umfasst zum Beispiel, wie in der Abbildung A1 gezeigt ist, eine zufällige Anzahl und Auswahl von Ladeleistungsniveaus P1 bis P7 und zufälligen Haltezeiten t1 bis t7. Insbesondere wird dieses zufällige Muster M mittels der datentechnisch mit der Ladesäule gekoppelten Rechnereinheit erzeugt und vorgegeben.

Wird dieses Muster M, wie in der weiteren Abbildung A2 in Figur 1 gezeigt ist, mittels der weiteren Rechnereinheit bei einem infrage kommenden Fahrzeug wiedererkannt, wird ein Ladevorgang L in der weiteren Rechnereinheit einem Ladevorgang L in der mit der Ladesäule datentechnisch gekoppelten Rechnereinheit zugeordnet.

Insbesondere basiert die Wiedererkennung des Musters M auf einer Vorgabe der Ladeleistungsniveaus P1 bis P7 einschließlich einer konfigurierbaren Abweichung und der Haltezeiten t1 bis t7 einschließlich einer konfigurierbaren Abweichung.

Werden mehrere Ladevorgänge L durch mehrere Fahrzeuge gleichzeitig gestartet, so ist es wegen des jeweils zufällig erzeugten Musters M, insbesondere mittels der unterschiedlichen Ladeleistungsniveaus P1 bis P7 und der verschiedenen Haltezeiten t1 bis t7 möglich, einen jeweiligen Ladevorgang L eindeutig einem Fahrzeug zuzuordnen.

Die verschiedenen Ladeleistungsniveaus P1 bis P7 können in Bezug auf ein minimales und ein maximales Ladeleistungsniveau vorgegeben werden, falls eine Ladeinfrastruktur lediglich Ladeunterbrechungen und keine einstellbare Ladeleistung P unterstützt.

Zudem kann vorgesehen sein, dass eine mögliche Vorauswahl für die Zuordnung von Ladevorgängen L, insbesondere mittels der Rechnereinheit und der weiteren Rechnereinheit, über einen Zeitstempel, beispielsweise eine Verbindungsherstellung zwischen Ladesäule und Fahrzeug oder einem Ladestart, erfolgt. Alternativ oder zusätzlich kann die mögliche Vorauswahl anhand von Positionsbestimmungsdaten des Fahrzeuges und der betreffenden Ladesäule erfolgen.

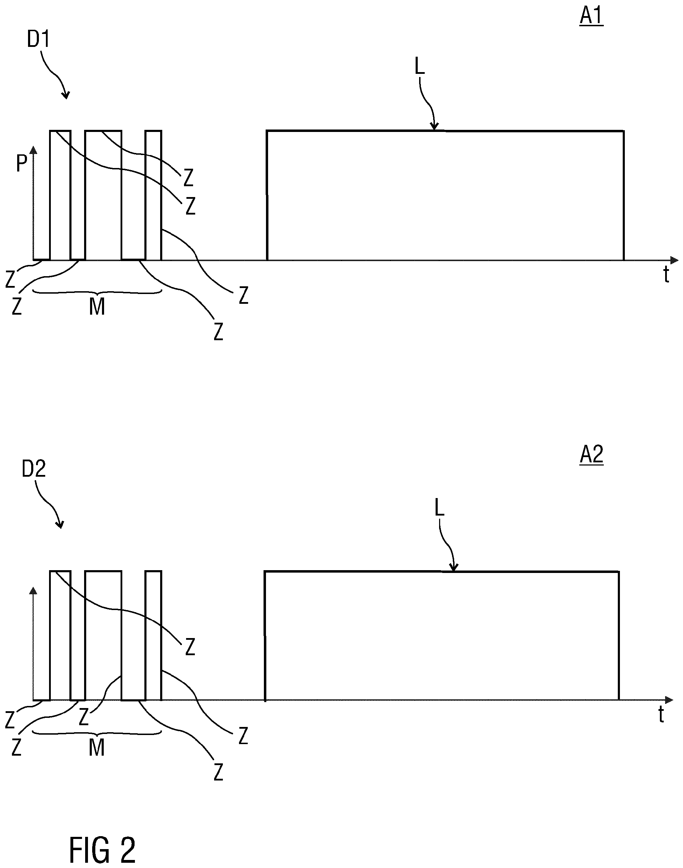

Figur 2 zeigt zwei Abbildungen A1, A2 mit jeweils einem Diagramm D1, D2, wobei auf einer Ordinate eine Ladeleistung P und auf der Abszisse die Zeit t abgetragen ist.

Eine Abbildung A1 zeigt ein Diagramm D1 mit einem Muster M in einem Ladeleistungsverlauf, insbesondere eine Ladeleistungsvorgabe, welche mittels der nicht näher gezeigten, datentechnisch mit dem Fahrzeug gekoppelten weiteren Rechnereinheit erzeugt und vorgegebenen wird.

In einer in Figur 2 gezeigten weiteren Abbildung A2 ist ein weiteres Diagramm D2 mit der mittels der datentechnisch mit der Ladesäule gekoppelten Rechnereinheit ermittelten, insbesondere gemessenen, Ladeleistung P dargestellt.

Insbesondere erfolgt hierbei die Ladeleistungsvorgabe anhand eines Zielladezustandes Z des elektrischen Energiespeichers des Fahrzeuges.

Auch hierzu ist vorgesehen, dass ein Muster M im Ladeleistungsverlauf, nachdem eine elektrische Kopplung zwischen dem elektrischen Energiespeicher des Fahrzeuges und der Ladesäule erkannt wurde, erzeugt und vorgegeben wird. Dabei erfolgt die Erzeugung und Vorgabe mittels der mit dem Fahrzeug gekoppelten weiteren Rechnereinheit.

Dabei wird das Muster M mittels des Zielladezustandes Z derart vorgegeben, dass eine Ladeunterbrechung generiert werden kann, wobei der Zielladezustand Z null beträgt, also kleiner ist als ein Ladestand des elektrischen Energiespeichers. Dazu wird ein Zielladezustand Z unter den momentanen Ladestand gesetzt, wobei ein Laden fortgesetzt wird, wenn der Zielladezustand Z über den momentanen Ladestand gesetzt wird.

Wird dieses mittels der weiteren Rechnereinheit des Fahrzeuges vorgegebene Muster M in der Rechnereinheit der Ladesäule wiedererkannt, wird der Ladevorgang L in der weiteren Rechnereinheit dem Ladevorgang L in der Rechnereinheit zugeordnet.

Auch wenn das Muster M mittels der weiteren Rechnereinheit erzeugt und vorgegeben wird, ist es anhand des Musters M möglich, dass im Fall von mehreren gleichzeitig gestarteten Ladevorgängen L eine eindeutige Zuordnung zwischen Fahrzeug und Ladesäule erfolgen kann.

In einer weiteren Ausführung wird in der Rechnereinheit und/oder in der weiteren Rechnereinheit eine Liste erstellt, welche jeweils zugehörige Ladevorgänge L in der weiteren Rechnereinheit und der Rechnereinheit beinhaltet.

## Patentansprüche

1. Verfahren zur Zuordnung eines Fahrzeuges zu einer Ladesäule zum Laden eines elektrischen Energiespeichers des Fahrzeuges, wobei die Ladesäule mit einer Rechnereinheit datentechnisch gekoppelt ist und das Fahrzeug datentechnisch mit einer weiteren Rechnereinheit gekoppelt ist,
**dadurch gekennzeichnet, dass**
- bei einer hergestellten elektrischen Verbindung zwischen der Ladesäule und dem elektrischen Energiespeicher ein mittels der weiteren Rechnereinheit oder der Rechnereinheit individuell erzeugtes Muster (M) in einem Ladeleistungsverlauf vorgegeben wird und
- das Fahrzeug der Ladesäule zugeordnet wird, bei welcher mittels der Rechnereinheit oder der weiteren Rechnereinheit das vorgegebenen Muster (M) des Ladeleistungsverlaufes wiedererkannt wird.

2. Verfahren nach Anspruch 1,
**dadurch gekennzeichnet, dass**
das Muster (M) in dem Ladeleistungsverlauf über einen Zielladezustand (Z) des elektrischen Energiespeichers mittels der weiteren Rechnereinheit vorgegeben wird.

3. Verfahren nach Anspruch 2,
**dadurch gekennzeichnet, dass**
das Muster (M) in dem Ladeleistungsverlauf über den Zielladezustand (Z) derart mittels der weiteren Rechnereinheit vorgegeben wird, dass eine Ladeunterbrechung generiert wird, indem der Zielladezustand (Z) unter einen momentanen Ladezustand gesetzt wird und das Laden fortgesetzt wird, indem der Zielladezustand (Z) über den momentanen Ladezustand gesetzt wird.

4. Verfahren nach einem der vorhergehenden Ansprüche,
**dadurch gekennzeichnet, dass**
als Muster (M) eine zufällige Anzahl von Ladeleistungsniveaus (P1 bis P7) mit zufälligen Haltezeiten (t1 bis t7) mittels der Rechnereinheit vorgegeben wird.

5. Verfahren nach Anspruch 4,
**dadurch gekennzeichnet, dass**
bei der Erkennung des Musters (M) sowohl eine Abweichung in Bezug auf die Ladeleistungsniveaus (P1 bis P7) als auch eine Abweichung in Bezug auf die Haltezeiten (t1 bis t7) berücksichtigt wird.

6. Verfahren nach einem der vorhergehenden Ansprüche,
**dadurch gekennzeichnet, dass**
eine mögliche Vorauswahl der Zuordnung von Fahrzeugen zu Ladesäulen anhand eines Zeitstempels der Verbindungsherstellung zwischen dem jeweiligen Fahrzeug und der jeweiligen Ladesäule erfolgt.

7. Verfahren nach einem der vorhergehenden Ansprüche,
**dadurch gekennzeichnet, dass**
eine mögliche Vorauswahl der Zuordnung von Fahrzeugen zu Ladesäulen anhand ermittelter Positionsbestimmungsdaten des jeweiligen Fahrzeuges und der jeweiligen Ladesäule erfolgt.

8. Verfahren nach einem der vorhergehenden Ansprüche,
**dadurch gekennzeichnet, dass**
eine Liste erstellt wird, welche jeweils zugehörige Ladevorgänge (L) in der weiteren Rechnereinheit und der Rechnereinheit beinhaltet.

9. Verfahren nach einem der vorhergehenden Ansprüche,
**dadurch gekennzeichnet, dass**
das Laden des elektrischen Energiespeichers des Fahrzeuges nach erfolgter Zuordnung des Fahrzeuges zu der Ladesäule ausgeführt wird.
